# EUROPÄISCHE PATENTSCHRIFT

(11) **EP 3 809 101 B1**
(45) Veröffentlichungstag und Bekanntmachung des Hinweises auf die Patenterteilung: **02.11.2022**
(21) Anmeldenummer: 20195122.5
(22) Anmeldetag: 08.09.2020
(51) Int. Cl.: G01F 13/00, B65G 65/46, F16H 3/34, F16H 15/48

(54) **DOSIERVORRICHTUNG**
DOSING DEVICE
DISPOSITIF DE DOSAGE

(30) Priorität: 01.10.2019 DE 102019126423
(43) Veröffentlichungstag der Anmeldung: 21.04.2021
(73) Patentinhaber: Schenck Process Europe GmbH, 64293 Darmstadt (DE)
(72) Erfinder: Schweizer, Peter, 64293 Darmstadt (DE)

(56) Entgegenhaltungen:
- CH-A5- 657 600
- DE-A1- 2 165 230
- ES-U- 1 162 583
- US-A- 2 643 026
- US-A- 4 887 478

## Beschreibung

Die Erfindung betrifft eine Dosiervorrichtung, insbesondere für Schüttgut, mit einer antreibbaren Dosierwelle, einer antreibbaren Hilfsaggregatwelle, einer Antriebswelle sowie einem zwischen der Antriebswelle und der Dosierwelle und/oder zwischen der Antriebswelle und der Hilfsaggregatwelle zwischengeschaltetem Getriebe.

Der Stand der Technik kennt Dosiervorrichtungen für Schüttgut, d.h. körniges oder auch stückiges Gemenge, das in einer schüttfähigen Form vorliegt.

Solche Dosiervorrichtungen weisen einen meist trichterförmigen Behälter auf, aus welchem mittels einer Dosierschnecke das Schüttgut nach außen gefördert wird. In bzw. an dem Behälter ist oftmals ein Rührwerk oder eine Walkvorrichtung angeordnet, um eine homogene Zuführung des Schüttguts zu ermöglichen. Die Dosierschnecke und das Rührwerk werden in der Regel mittels eines einen Antriebsmotor aufweisenden Antriebs angetrieben.

Ein solcher Antrieb für eine solche Dosiervorrichtung bzw. deren Wellen ist beispielsweise in "Coperion K-Tron Produkte-Information, K2-Antriebsmodule", beschrieben, nämlich "K2-MV-S60".

Bei diesem Antrieb erfolgt eine Übertragung eines Drehmoments vom Antriebsmotor zur Dosierschnecke mittels eines Zahnriemengetriebes, welches derart ausgestaltet ist, dass durch einen Wechsel einer Drehrichtung des Antriebsmotors eine von zwei unterschiedliche Untersetzungen, d.h. eine Übersetzung (d.h. Verhältnis zwischen Antriebs- und Abtriebsdrehzahl) ins Langsame, realisierende Zahnriemenübertragungen bei dem Zahnriemengetriebe aktiviert wird. D.h., dieser Antrieb bzw. dessen Übertragungsaufbau ermöglicht zwei verschiedene Untersetzungen.

Das Dokument ES 1 162 583 U bezieht sich auf eine Dosiervorrichtung, die eine Dosierwelle, eine Hilfswelle und eine Antriebswelle umfasst, wobei zwei Getriebeelemente austauschbar sind, um das Übersetzungsverhältnis zwischen dem Motor/Antriebswelle und der angetriebenen Wellen zu ändern.

Das Dokument US 2 643 026 A offenbart eine Dosiervorrichtung, die eine Dosierwelle und eine Hilfseinheit umfasst, die von derselben Welle getragen werden. Die Variation des Drehzahlverhältnisses wird durch Ändern des Teilungsdurchmessers einer Riemenscheibe erhalten.

Wünschenswert wäre, bei einer Dosiervorrichtung mehrere verschiedene Übersetzungen zwischen Antriebswelle und Dosierschnecke, zwischen Dosierschnecke und Rührwerk oder Antriebswelle und Rührwerk realisieren zu können, um eine solche Dosiervorrichtung flexibel an unterschiedliche Eigenschaften des Schüttgutes und Förderleistungsanforderungen anzupassen. Der Erfindung liegt die Aufgabe zugrunde, eine Dosiervorrichtung aus dem Stand der Technik zu verbessern.

Diese Aufgabe wird gelöst durch eine Dosiervorrichtung sowie Verfahren zum Betreiben dieser Dosiervorrichtung mit den Merkmalen des jeweiligen unabhängigen Anspruchs. Vorteilhafte Weiterbildungen der Erfindung sind Gegenstand abhängiger Ansprüche sowie der nachfolgenden Beschreibung - und beziehen sich sowohl auf die Vorrichtung wie auch auf die Verfahren. Die **Dosiervorrichtung,** insbesondere für Schüttgut, d.h. eingesetzt für ein Dosieren von Schüttgut, sieht eine antreibbare Dosierwelle, eine antreibbare Hilfsaggregatwelle, eine Antriebswelle sowie einem zwischen der Antriebswelle und der Dosierwelle und/oder zwischen der Antriebswelle und der Hilfsaggregatwelle zwischengeschaltetes Getriebe vor.

Dabei kann - nach üblichem technischem Verständnis - unter Getriebe ein Maschinenelement verstanden werden, mit dem Bewegungsgrößen geändert werden können, wobei insbesondere die Änderung einer Kraft, einer Drehzahl oder eines Drehmoments (bei dieser Änderung) die entscheidende Rolle spielt. Dabei bedient sich das Getriebe auch, insbesondere miteinander gekoppelter Bauteile, welche als Getriebeelemente bezeichnet werden können.

Das Getriebe bei der Dosiervorrichtung weist zumindest zwei, an die antreibbaren Wellen ankuppelbare Getriebeelemente, beispielsweise - abhängig von der Art des Getriebes - Räder, insbesondere Zahn-, Reib- oder Riemenräder, auf, wobei die zumindest zwei Getriebeelemente derart zueinander angeordnet sind, dass deren Rotationsachsen parallel zueinander sind und dass Schnittpunkte der Rotationsachsen mit einer zu den Rotationsachsen normalen Getriebeebene A gleichmäßig verteilt auf einem Kreisumfang U eines Kreis B liegen.

D.h. auch, dass die Mittelpunktwinkel zwischen jeweils zwei benachbarten, auf dem Kreis B liegenden Schnittpunkten gleich (groß) sind, so beispielswiese bei drei Getriebeelementen (und dadurch drei Schnittpunkten) jeweils 120°, bei vier Getriebeelementen (und dadurch vier Schnittpunkten)jeweils 90°, bei fünf Getriebeelementen (und dadurch fünf Schnittpunkten) jeweils 72°, bei sechs Getriebeelementen (und dadurch sechs Schnittpunkten) jeweils 60°, u.s.w. (d.h., im Allgemeinen mit (immer gleichen) Mittelpunktwinkeln von 360°/Anzahl der Getriebeelemente).

Anders ausgedrückt sind die, zumindest zwei Getriebeelemente derart zueinander angeordnet, dass die Kreissehnen zwischen jeweils zwei benachbarten, auf dem Kreis B liegenden Schnittpunkten gleich (lang) sind. Die Länge der Kreissehne entspricht dabei einem konstanten Achsabstand zwischen den ankuppelbaren Wellen, wodurch das Getriebe in unterschiedlichen Positionen aufgesteckt werden kann.

Mittels unterschiedlicher Getriebeelemente zwischen den Wellen lassen sich somit eine Mehrzahl von unterschiedlichen Übersetzungen und so - insbesondere darüber hinaus bei Antrieb mittels Drehzahl einstellbarem Antriebsmotor - ein großer Drehzahleinstellbereich realisieren, ohne, dass ein anderes, weiteres Getriebe und/oder ein Austausch von Getriebeelementen ("Wechselräder") und/oder andere ähnliche aufwändige und kostenintensive Maßnahmen wie bsp. Riemenauflegen oder Spannen erforderlich sind.

Eine größtmögliche Spreizung mit feinster Abstufung ist mit geringstem "Materialaufwand" in einem und mit einem "Bauteil" realisiert/vorhanden.

Dadurch kann - mit der Dosiervorrichtung, insbesondere durch das Getriebe - bei minimalem mechanischem Umbauaufwand ("Drehen"/"Wenden") - ein weiter Drehzahlbereich zur Verfügung gestellt werden sowie auch in vielfältiger Weise (bei entsprechenden Antriebskonzepten von unmittelbar und mittelbar angetriebenen Wellen) - entsprechend mit dem gleichen minimalen mechanischen Umbauaufwand ("Drehen"/"Wenden") - das Verhältnis der Wellendrehzahlen untereinander, beispielsweise der Hilfsaggregat(-wellen-)drehzahl zu der Dosierwellen-/Dosierschneckendrehzahl bzw. der Antriebswellendrehzahl zu der Hilfsaggregat(-wellen-)drehzahl und/oder Dosierwellen-/Dosierschneckendrehzahl, verändert werden.

Bei dem **Verfahren zum Betreiben dieser Dosiervorrichtung** kann vorgesehen sein, dass für ein verändertes Übersetzungsverhältnis zwischen der Antriebswelle und den angetriebenen Wellen oder zwischen den angetriebenen Wellen das Getriebe von den Wellen entkoppelt und anschließend in einer in der normalen Getriebeebene A um einen vorgebbaren Winkel W gedrehten Position wieder mit den Wellen gekoppelt wird ("Drehen des Getriebes").

Bei dem **Verfahren zum Betreiben dieser Dosiervorrichtung** kann auch vorgesehen sein, dass für ein verändertes Übersetzungsverhältnis zwischen der Antriebswelle und den angetriebenen Wellen oder zwischen den angetriebenen Wellen das Getriebe von den Wellen entkoppelt, um 180° um eine Achse D gedreht wird, die auf der normalen Getriebeebene A liegt und durch den Mittelpunkt M des Kreises B führt, und anschließend in der gedrehten Position wieder mit den Wellen gekoppelt wird ("Wenden des Getriebes").

Vereinfacht und anschaulich ausgedrückt, bei erstem **Verfahren zum Betreiben dieser Dosiervorrichtung** wird das Getriebe "gedreht", bei zweitem **Verfahren zum Betreiben dieser Dosiervorrichtung** wird das Getriebe "gewendet". Darüber hinaus können beide **Verfahren zum Betreiben dieser Dosiervorrichtung** auch gemeinsam durchgeführt werden, d.h. es wird "gedreht" und "gewendet", wodurch sich so alle vorhandenen Übersetzungsverhältnisse nutzen lassen.

Realisiert so beispielsweise das Getriebe drei (drei verschiedene Übersetzungen realisierende) Getriebeelemente, lassen sich durch das "Drehen" des Getriebes drei bzw. durch das "Wenden" des Getriebes zwei und durch das "Drehen" und das "Wenden" des Getriebes (drei mal zwei) sechs Übersetzungen realisieren (bzw. bei mehr Getriebeelemente entsprechen mehr Übersetzungen/Drehzahlverhältnisse) (- ohne, dass ein anderes Getriebe und/oder ein Austausch von Getriebeelementen und/oder anderen ähnlichen aufwändigen und kostenintensiven Maßnahmen erforderlich sind).

Die **Dosiervorrichtung** sowie auch deren **Verfahren zum Betreiben dieser Dosiervorrichtung** stellen so auch eine flexible, effektive und effiziente, wie auch kostengünstige Lösung für eine über einen großen Drehzahlbereich betreibbare Dosiervorrichtung dar.

Weiter vorteilhaft bei der Dosiervorrichtung bzw. deren Verfahren erweist sich, dass eine konventionelle, kostengünstige Antriebstechnik mit limitiertem Einstellbereich verwendbar ist. Oftmals sind Anriebe mit großem Stellbereich, beispielsweise Servo-Antrieben, schlecht mit allen Optionen, beispielsweise Explosionsschutz, verfügbar oder sehr teuer.

Auch können aktuell "eingestellte" Übersetzungsverhältnisse bei eingebautem Getriebe durch "schnelles" Hinsehen bzw. alleine durch "Hinsehen" erkannt bzw. an der Dosiervorrichtung abgelesen werden.

Weiterbildend kann bei der Dosiervorrichtung vorgesehen sein, dass das Getriebe ein formschlüssiges Getriebe, insbesondere ein Zahnradgetriebe, ein Zahnriemengetriebe oder ein Kettengetriebe, oder ein kraftschlüssiges Getriebe, insbesondere ein Riemengetriebe, ist.

Beim Abnehmen und Aufstecken des Getriebes auf ein gegenüberliegendes Wellenende der Antriebswelle kann ein Wechsel der Drehrichtung der Antriebswelle erforderlich sein.

Die Auswahl der Art des Getriebes kann sich beispielsweise nach Art des Schüttgutes, notwendigen Drehmomenten, gewünschten Drehzahlen u.Ä. richten.

Ferner kann weiter auch vorgesehen sein, dass drei, vier, fünf oder mehr als fünf Getriebeelemente bei dem Getriebe realisiert sind, die derart zueinander angeordnet sind, dass deren Rotationsachsen parallel zueinander sind und die Schnittpunkte der Rotationsachsen mit der zu den Rotationsachsen normalen Getriebeebene A gleichmäßig verteilt auf dem Kreisumfang U des Kreis B liegen.

Anders ausgedrückt, mit jedem weiteren zusätzlichen - entsprechend angeordneten - Getriebeelement können die möglichen Drehzahlverhältnisse bei der Dosiervorrichtung um zwei Drehzahlverhältnisse erweitert werden.

Zweckmäßig kann es auch sein, dass die Getriebeelemente derart ausgebildet sind, dass unter Verwendung der Getriebeelemente bei dem Getriebe eine maximale Übersetzung ins Langsame von 1:5, insbesondere 1:4, des Weiteren insbesondere 1:2,5, oder eine maximale Übersetzung ins Schnelle von 1:0,2, insbesondere 1:0,25, des Weiteren insbesondere 1:0,4, oder eine maximale Spreizung von 25, insbesondere 16, des Weiteren insbesondere 6,25 realisierbar ist.

Ferner kann auch vorgesehen sein, dass eine die Antriebswelle antreibende Antriebseinheit drehzahlkonstant oder - wodurch der mögliche Drehzahlbereich bei der Dosiervorrichtung weiter vergrößerbar ist - drehzahlvariabel ist, beispielsweise einen Drehstrom Asynchronmotor.

Darüber hinaus kann vorgesehen sein, dass das Getriebe derart zwischen den Wellen angeordnet ist, dass eine der antreibbaren Wellen unmittelbar angetrieben ist/wird, beispielsweise die Dosierwelle oder die Hilfsaggregatwelle, insbesondere die Hilfsaggregatwelle. In diesem Fall ist so die Übersetzung der (über das Getriebe) "mittelbar" angetrieben Welle veränderbar - wie auch das Drehzahlverhältnis zwischen der unmittelbar und der mittelbar angetriebenen Welle.

D.h., so kann hier beispielsweise dann bei der Dosiervorrichtung die Übersetzung bzw. das Drehzahlverhältnis zwischen der Dosierwelle und der Hilfsaggregatwelle - ohne großen Aufwand - verändert werden.

Auch kann vorgesehen sein, dass - bei mehr als zwei Getriebeelementen - das Getriebe derart zwischen den Wellen angeordnet ist, dass die antreibbaren Wellen mittelbar angetrieben sind.

D.h., so kann hier beispielsweise dann bei der Dosiervorrichtung sowohl die Übersetzung bzw. das Drehzahlverhältnis zwischen der Dosierwelle und der Hilfsaggregatwelle als auch die Übersetzung bzw. das Drehzahlverhältnis zwischen der Antriebswelle und der Dosierwelle bzw. der Hilfsaggregatwelle - ohne großen (Umbau-)Aufwand - verändert werden.

Weiterbildend kann auch vorgesehen sein, dass ein durch die Hilfsaggregatwelle betätigtes/angetriebenes Hilfsaggregat eine Austraghilfe ist, insbesondere ein Rührwerk oder ein Walkmechanismus.

Weiterbildend kann auch vorgesehen sein, dass ein durch die Hilfsaggregatwelle betätigtes/angetriebenes Hilfsaggregat eine Vergleichmäßigungsvorrichtung ist, insbesondere ein Dosierstern, eine Abschlagwalze oder ein mechanischer Rüttler/Klopfer.

Gegebenenfalls kann bei der Dosiervorrichtung zumindest eine weitere Antriebswelle zum Antrieb zusätzlicher Dosierwellen und/oder Hilfsaggregatwellen vorgesehen sein.

Zweckmäßig ist es, wenn alle die Wellen ankuppelnde Kuppelstellen an den Getriebeelementen baugleich ausgebildet sind, wodurch so sich insbesondere das "Drehen" und/oder "Wenden" des Getriebes bei der Dosiervorrichtung äußerst einfach realisieren lässt. Anders und einfach ausgedrückt, durch baugleiche Kuppelstellen lässt sich das Getriebe des Dosiervorrichtung äußerst flexibel einsetzen - und so äußerst einfach unterschiedliche Übersetzungen realisieren.

Weiterbildend kann vorgesehen sein, dass zumindest die Dosierwelle und die Hilfsaggregatwelle parallel zueinander und/oder horizontal ausgerichtet sind. Eine entsprechend vorzusehende Anordnung bei den Wellen kann Bauraum getrieben sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Anordnung, die durch die Ansprüche definiert ist.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf). Die Ausführungsbeispiele dienen der Erläuterung der Erfindung und beschränken die Erfindung nicht auf darin angegebene Kombinationen von Merkmalen, auch nicht in Bezug auf funktionale Merkmale.

Es zeigen:
- FIG 1: eine Dosiervorrichtung gemäß einer Ausführung,
- FIG 2: ein Detail der Dosiervorrichtung aus FIG 1, nämlich ein Wendegetriebe mit spezifizierten Übersetzungen gemäß einer Ausführung,
- FIG 3: eine schematische Darstellung der Getriebegeometrie,
- FIG 4: mögliche Antriebskonzepte für die Dosiervorrichtung aus FIG 1 mit dem Wendegetriebe aus FIG 2.

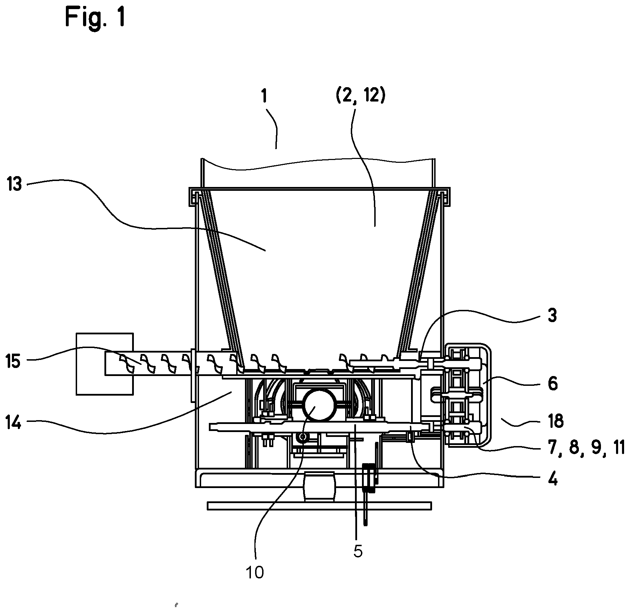

Fig. 1 zeigt eine Dosiervorrichtung 1 für Schüttgut 2.

Diese Dosiervorrichtung 1 weist einen trichterförmigen Behälter 13 zur Aufnahme von Schüttgut 2 auf.

An der Unterseite 14 des Behälters 13 ist eine Auslassöffnung 14 vorgesehen, durch welche sich eine horizontale Dosierschnecke 15 aus dem Behälter 13 heraus erstreckt. Mittels der Dosierschnecke 15 wird das Schüttgut 2 aus dem Behälter 13 befördert.

Des Weiteren umfasst die Dosiervorrichtung 1 ein Hilfsaggregat 12 in Form eines Rührwerks bzw. Walkmechanismus, welches sich hinter dem Behälter 13 befindet (nur angedeutet).

Die Dosierschnecke 15 sowie das Rührwerk 12 werden, wie FIG 1 verdeutlicht, unter Verwendung eines Antriebsmotors 10 angetrieben, welcher unterhalb 14 des Behälters 13 angeordnet ist und eine, die Dosiervorrichtung antreibende Antriebswelle 5 besitzt, die unmittelbar mit einer Agitationswelle 4 gekoppelt, bzw. einteilig ausgeführt ist.

Dabei erfolgt der Antrieb des Rührwerks 12 durch die Agitationswelle 4.

Seitlich 18 des Behälters 13, in axialer Verlängerung der Agitationswelle 4 ist ein Getriebe 6 angeordnet, mittels welchem die Antriebsbewegung der - horizontalen - Agitationswelle 4 auf eine - horizontal und parallel zur Agitationswelle 4 ausgerichteten - Dosierwelle 3 übertragen wird, welche ihrerseits dann die mit ihr drehfest verbundende, hier beispielsweise an ihr angeflanschte, (horizontale) Dosierschnecke 15 antreibt.

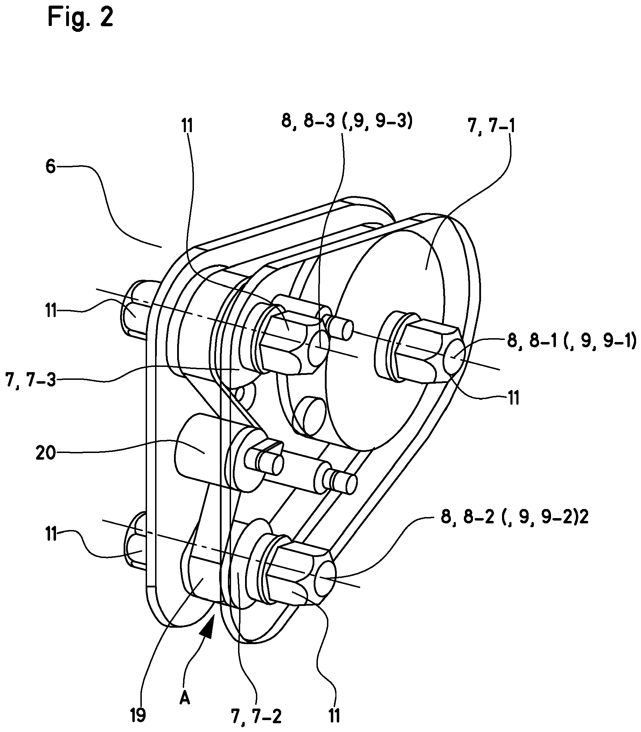

FIG 2 zeigt das Getriebe 6 - inkl. der durch dieses Getriebe 6 realisierbaren Übersetzungen - im Detail.

Wie FIG 2 zeigt, sieht das (offene Zahnriemen-)Getriebe 6 drei an die Wellen, d.h. die Dosier- 3 und Agitationswelle 4 ankuppelbare Getriebeelemente, hier in Form dreier über einen Zahnriemen 19 (zur Antriebsübertragung) verbundene Ritzel, 7, 7-1, 7-2, 7-3 unterschiedlicher Zähnezahl Z (hier Z16/Z21/Z40) vor.

Mittels einer Umlenk-/Spannrolle 20 kann der Zahnriemen 19 auf Spannung gehalten werden.

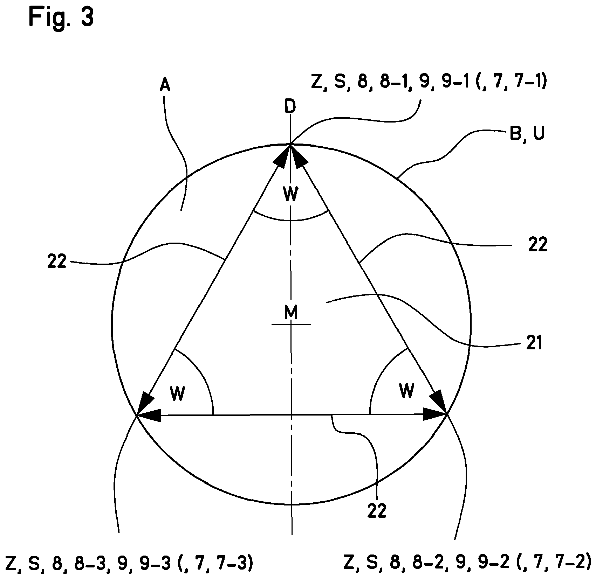

Die drei Getriebeelemente bzw. Ritzel 7, 7-1, 7-2, 7-3 sind, wie FIG 3 zeigt, derart zueinander angeordnet, dass deren drei Rotationsachsen 8, 8-1, 8-2, 8-3 parallel zueinander sind und Schnittpunkte S 9, 9-1, 9-2, 9-3 der Rotationsachsen 8, 8-1, 8-2, 8-3 mit einer zu den Rotationsachsen 8, 8-1, 8-2, 8-3 normalen Getriebeebene A gleichmäßig verteilt auf einem Kreisumfang U eines Kreis B liegen.

Kurz ausgedrückt, die drei Getriebeelemente bzw. Ritzel 7, 7-1, 7-2, 7-3 bzw. deren drei Rotationsachsen 8, 8-1, 8-2, 8-3 spannen ein, in der Getriebeebenen A liegendes gleichseitiges Dreieck 21 auf, dessen Dreiecksseiten 22 gleich lang sind. Die Dreiecksseiten 22 entsprechen zudem den Sehnen eines Umkreises B durch die Schnittpunkte S 9, 9-1, 9-2, 9-3, wobei deren Zwischenwinkel W (d.h., Mittelpunktwinkel W bei dem (Um-)Kreis B) gleich groß, in diesem Fall 120°, sind.

Somit lassen sich bei Bewegungsübertragung von einem dieser drei Ritzel Getriebeelemente bzw. Ritzel 7, 7-1, 7-2, 7-3 auf ein zweites dieser drei Ritzel Getriebeelemente bzw. Ritzel 7, 7-1, 7-2, 7-3 (d.h. "ein Übersetzungspaar/eine Übersetzungspaarung") - insgesamt sechs unterschiedliche Übersetzungen realisieren, nämlich, 0,4/0,5/0,8/1,3/1,9/2,5, deren (Gesamt-)Spreizung so dann 6,25 beträgt.

Der Wechsel einer Übersetzung bei dem Getriebe 6 kann, sind die Getriebeelemente bzw. Ritzel 7, 7-1, 7-2, 7-3 in der geschilderten Weise angeordnet und insbesondere deren Kuppelstellen 11 für anzukuppelnde die Wellen, d.h. hier in diesem Fall die Dosierwelle 3 und die Agitationswelle 4, baugleich ausgebildet (, beispielsweise, wie FIG 2 verdeutlicht, durch baugleiche Mehrkantköpfe), durch einfaches Drehen des Getriebes 6 in der Getriebeebene A (um 120°) und/oder Herumklappen des Getriebes 6 (um 180°), d.h. Wenden des Getriebes 6, bewerkstelligt werden.

Anders ausgedrückt, für ein verändertes Übersetzungsverhältnis bei dem "Aufsteck-/Wendegetriebe" 6 - zwischen der Agitationswelle 4 und Dosierwelle 3 wird:
das Getriebe 6 von den Wellen, d.h. hier der Agitationswelle 4 und der Dosierwelle 3, abgesteckt/entkoppelt und anschließend in einer in der normalen Getriebeebene A um einen vorgebbaren Winkel W gedrehten Position, hier in der um 120° gedrehten Position, wieder mit den Wellen, d.h. hier der Agitationswelle 4 und der Dosierwelle 3, aufgesteckt/gekoppelt ("Drehen")
   und/oder
das Getriebe 6 von den Wellen, d.h. hier der Agitationswelle 4 und der Dosierwelle 3, abgesteckt/entkoppelt, um 180° um eine Achse D gedreht, die auf der normalen Getriebeebene A liegt und durch den Mittelpunkt M des Kreises B führt, und anschließend in der gedrehten (bzw. herumgeklappten) Position wieder mit den Wellen, d.h. hier der Agitationswelle 4 und der Dosierwelle 4, aufgesteckt/gekoppelt ("Wenden").

Mit dem geschilderten Aufsteckgetriebe 6 sind so sechs unterschiedliche Aufsteckpositionen realisierbar, welche so die sechs unterschiedlichen Übersetzungen, wie in FIG 2 (und FIG 3) verdeutlicht, zur Verfügung stellen.

Zusammengefasst - die Dosiervorrichtung 1, insbesondere durch ihr Aufsteckgetriebe 6, - wie nach den FIGen 1 bis 3 gezeigt, ermöglicht bzw. stellt so - bei minimalem mechanischem Umbauaufwand ("Drehen"/"Wenden") - einen weit vergrößerten Drehzahlbereich zu Verfügung. Entsprechend kann so auch - mit dem gleichen minimalen mechanischen Umbauaufwand ("Drehen"/"Wenden") - das Verhältnis der Dosierschneckendrehzahl zur Rührwerksdrehzahl wie auch das Drehzahlverhältnis zwischen Antrieb/-welle 5 und Dosierwelle 3/-schnecke 15 verändert werden.

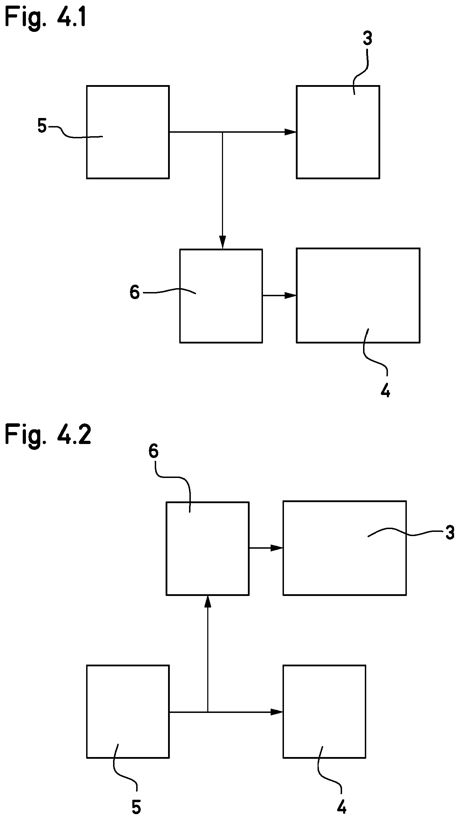

FIG 4.1 und Fig. 4.2 stellen zwei mögliche Antriebskonzepte vor. FIG. 4.2 entspricht dem in den FIGen 1 bis 2 beschriebenen Antriebskonzept der Dosiervorrichtung 1 von direkt angetriebener Agitationswelle 4 bzw. Rührwerk 12 und über das Aufsteckgetriebe 6 mittelbar angetriebener Dosierwelle 3 bzw. Dosierschnecke 15., Durch minimalem mechanischen Umbauaufwand ("Drehen"/"Wenden") kann das Verhältnis der Dosierschneckendrehzahl zur Rührwerksdrehzahl wie auch das Drehzahlverhältnis zwischen Antrieb/-welle 5 und Dosierwelle 3/-schnecke 15 verändert werden kann..

Bei dem alternativen Antriebskonzept in FIG. 4.1 wird bei der Dosiervorrichtung 1 die Dosierwelle 3 bzw. die Dosierschnecke 15 direkt angetrieben, wohingegen die Agitationswelle 4 bzw. das Rührwerk 12 (über das Aufsteckgetriebe 6) mittelbar angetrieben wird, wodurch hier das Verhältnis der Dosierschneckendrehzahl zur Rührwerksdrehzahl sowie das Drehzahlverhältnis zwischen Antrieb/-welle 5 und Agitationswelle 4/Rührwerk 12 verändert werden kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen, die durch die Ansprüche definiert ist.

### Bezugszeichen

- 1: Dosiervorrichtung
- 2: Schüttgut
- 3: Dosierwelle
- 4: Hilfsaggregatwelle, Agitationswelle
- 5: Antriebswelle
- 6: Getriebe, Aufsteck-/Wendegetriebe
- 7, 7-1, 7-2, 7-3: Getriebeelement, Ritzel
- 8, 8-1, 8-2, 8-3: Rotationsachse
- 9, 9-1, 9-2, 9-3: Schnittpunkt
- 10: Antriebseinheit/-motor, Drehstrom Asynchronmotor

- 11: Kuppelstelle
- 12: Hilfsaggregat, Rührwerk, Walkmechanismus
- 13: Behälter
- 14: Unterseite, unterhalb
- 15: Dosierschnecke
- 18: seitlich
- 19: Zahnriemen
- 20: Umlenk-/Spannrolle

- 21: Dreieck
- 22: Dreieckseite, Sehne

- A: Getriebeebene
- U: Kreisumfang
- B: (UM-)Kreis
- W: Mittelpunkt-/Zwischen-/Winkel D Achse
- M: Mittelpunkt
- Z: Zähnezahl
- S: Schnittpunkt

## Patentansprüche

1. Dosiervorrichtung (1), insbesondere für Schüttgut (2), mit einer antreibbaren Dosierwelle (3), einer antreibbaren Hilfsaggregatwelle (4), einer Antriebswelle (5) sowie einem zwischen der Antriebswelle (5) und der Dosierwelle (3) und/oder zwischen der Antriebswelle (5) und der Hilfsaggregatwelle (4) zwischengeschaltetem Getriebe (6),
**dadurch gekennzeichnet, dass**
das Getriebe (6) zumindest zwei an die antreibbaren Wellen (3, 4) ankuppelbare Getriebeelemente (7, 7-1, 7-2, 7-3) aufweist, wobei die zumindest zwei Getriebeelemente (7, 7-1, 7-2, 7-3) derart zueinander angeordnet sind, dass deren Rotationsachsen (8, 8-1, 8-2, 8-3) parallel zueinander sind und Schnittpunkte (9, 9-1, 9-2, 9-3) der Rotationsachsen (8, 8-1, 8-2, 8-3) mit einer zu den Rotationsachsen (8, 8-1, 8-2, 8-3) normalen Getriebeebene A gleichmäßig verteilt auf einem Kreisumfang U eines Kreis B liegen.

2. Dosiervorrichtung (1) nach mindestens einem der voranstehenden Ansprüche,
**dadurch gekennzeichnet, dass**
das Getriebe (6) ein formschlüssiges Getriebe, insbesondere ein Zahnradgetriebe, ein Zahnriemengetriebe oder ein Kettengetriebe, oder ein kraftschlüssiges Getriebe, insbesondere ein Riemengetriebe, ist.

3. Dosiervorrichtung (1) nach mindestens einem der voranstehenden Ansprüche,
**gekennzeichnet durch**
drei, vier, fünf oder mehr als fünf Getriebeelemente (7-1, 7-2, 7-3, ...) bei dem Getriebe (6), die derart zueinander angeordnet sind, dass deren Rotationsachsen (8-1, 8-2, 8-3, ...) parallel zueinander sind und die Schnittpunkte (9-1, 9-2, 9-3, ...) der Rotationsachsen (8-1, 8-2, 8-3, ...) mit der zu den Rotationsachsen (8-1, 8-2, 8-3, ...) normalen Getriebeebene A gleichmäßig verteilt auf dem Kreisumfang U des Kreis B liegen.

4. Dosiervorrichtung (1) nach mindestens einem der voranstehenden Ansprüche,
**dadurch gekennzeichnet, dass**
die Getriebeelemente (7) derart ausgebildet sind, dass unter Verwendung der Getriebeelemente (7) bei dem Getriebe (6) eine maximale Übersetzung ins Langsame von 1:5, insbesondere 1:4, des Weiteren insbesondere 1:2,5, oder eine maximale Übersetzung ins Schnelle von 1:0,2, insbesondere 1:0,25, des Weiteren insbesondere 1:0,4, oder eine maximale Spreizung von 25, insbesondere 16, des Weiteren insbesondere 6,25 realisierbar ist.

5. Dosiervorrichtung (1) nach mindestens einem der voranstehenden Ansprüche,
**gekennzeichnet durch**
eine die Antriebswelle (5) antreibende Antriebseinheit (10) drehzahlkonstant oder drehzahlvariabel ist.

6. Dosiervorrichtung (1) nach mindestens einem der voranstehenden Ansprüche,
**dadurch gekennzeichnet, dass**
das Getriebe (6) derart zwischen den Wellen (3, 4, 5) angeordnet ist, dass eine der antreibbaren Wellen (3, 4) unmittelbar angetrieben ist.

7. Dosiervorrichtung (1) nach mindestens einem der Ansprüche 1-5,
**dadurch gekennzeichnet, dass**
bei mehr als zwei Getriebeelementen (7, 7-1, 7-2, 7-3, ...) das Getriebe (6) derart zwischen den Wellen (3, 4, 5) angeordnet ist, dass die antreibbaren Wellen (3, 4) mittelbar angetrieben sind.

8. Dosiervorrichtung (1) nach mindestens einem der voranstehenden Ansprüche,
**dadurch gekennzeichnet, dass**
ein durch die Hilfsaggregatwelle (4) betätigtes Hilfsaggregat (12) eine Austraghilfe ist, insbesondere ein Rührwerk oder ein Walkmechanismus.

9. Dosiervorrichtung (1) nach mindestens einem der Ansprüche 1-7,
**dadurch gekennzeichnet, dass**
ein durch die Hilfsaggregatwelle (4) betätigtes Hilfsaggregat (12) eine Vergleichmäßigungsvorrichtung ist, insbesondere ein Dosierstern, eine Abschlagwalze oder ein mechanischer Rüttler/Klopfer.

10. Dosiervorrichtung (1) nach mindestens einem der voranstehenden Ansprüche,
**gekennzeichnet durch**
zumindest eine weitere Antriebswelle (5) zum Antrieb zusätzlicher Dosierwellen (3) und/oder Hilfsaggregatwellen (4).

11. Dosiervorrichtung (1) nach mindestens einem der voranstehenden Ansprüche,
**dadurch gekennzeichnet, dass**
alle die Wellen (3, 4, 5) ankuppelnde Kuppelstellen (11) an den Getriebeelementen (7) baugleich ausgebildet sind.

12. Dosiervorrichtung (1) nach mindestens einem der voranstehenden Ansprüche,
**dadurch gekennzeichnet, dass**
zumindest die Dosierwelle (3) und die Hilfsaggregatwelle (4) parallel zueinander und/oder horizontal ausgerichtet sind.

13. Dosiervorrichtung (1) nach mindestens einem der voranstehenden Ansprüche,
**eingesetzt zum**
Dosieren von Schüttgut (2).

14. Verfahren zum Betreiben einer Dosiervorrichtung (1) nach mindestens einem der voranstehenden Ansprüche,
**dadurch gekennzeichnet, dass**
für ein verändertes Übersetzungsverhältnis zwischen Antriebswelle (5) und angetriebenen Wellen (3, 4) oder zwischen den angetriebenen Wellen (3, 4) das Getriebe (6) von den Wellen (3, 4, 5) entkoppelt und anschließend in einer in der normalen Getriebeebene A um einen vorgebbaren Winkel W gedrehten Position wieder mit den Wellen (3, 4, 5) gekoppelt wird,
und/oder
für ein verändertes Übersetzungsverhältnis zwischen Antriebswelle (5) und angetriebenen Wellen (3, 4) oder zwischen den angetriebenen Wellen (3, 4) das Getriebe (6) von den Wellen (3, 4, 5) entkoppelt, um 180° um eine Achse D gedreht wird, die auf der normalen Getriebeebene A liegt und durch den Mittelpunkt M des Kreises B führt, und anschließend in der gedrehten Position wieder mit den Wellen (3, 4, 5) gekoppelt wird.

## Claims

1. Dosing device (1), in particular for bulk material (2), having a drivable dosing shaft (3), a drivable auxiliary device shaft (4), a drive shaft (5), as well as a transmission (6) interposed between the drive shaft (5) and the dosing shaft (3) and/or between the drive shaft (5) and the auxiliary device shaft (4), **characterized in that** the transmission (6) has at least two transmission elements (7, 7-1, 7-2, 7-3) that can be coupled to the drivable shafts (3, 4), wherein the at least two transmission elements (7, 7-1, 7-2, 7-3) are arranged in such a manner relative to one another that their rotational axes (8, 8-1, 8-2, 8-3) are parallel to one another and points of intersection (9, 9-1, 9-2, 9-3) of the rotational axes (8, 8-1, 8-2, 8-3) with a transmission plane A that is perpendicular to the rotational axes (8, 8-1, 8-2, 8-3) are uniformly distributed on a circumference U of a circle B.

2. Dosing device (1) according to at least one of the preceding claims, **characterized in that** the transmission (6) is a positive transmission, in particular a gear transmission, a toothed belt transmission, or a chain transmission, or is a frictional transmission, in particular a belt transmission.

3. Dosing device (1) according to at least one of the preceding claims, **characterized by** three, four, five, or more than five transmission elements (7-1, 7-2, 7-3, ...) in the transmission (6) that are arranged in such a manner relative to one another that their rotational axes (8-1, 8-2, 8-3, ...) are parallel to one another and the points of intersection (9-1, 9-2, 9-3, ...) of the rotational axes (8-1, 8-2, 8-3, ...) with the transmission plane A that is perpendicular to the rotational axes (8-1, 8-2, 8-3, ...) are uniformly distributed on the circumference U of the circle B.

4. Dosing device (1) according to at least one of the preceding claims, **characterized in that** the transmission elements (7) are designed such that, when the transmission elements (7) are employed in the transmission (6), a maximum speed reduction of 1:5, particularly 1:4, further particularly 1:2.5, or a maximum speed increase of 1:0.2, particularly 1:0.25, further particularly 1:0.4, or a maximum ratio spread of 25, particularly 16, further particularly 6.25, can be achieved.

5. Dosing device (1) according to at least one of the preceding claims, **characterized by** a drive unit (10) that drives the drive shaft (5) is fixed speed or variable speed.

6. Dosing device (1) according to at least one of the preceding claims, **characterized in that** the transmission (6) is arranged between the shafts (3, 4, 5) in such a manner that one of the drivable shafts (3, 4) is driven directly.

7. Dosing device (1) according to at least one of claims 1 - 5, **characterized in that**, in the case of more than two transmission elements (7, 7-1, 7-2, 7-3, ...), the transmission (6) is arranged between the shafts (3, 4, 5) in such a manner that the drivable shafts (3, 4) are driven indirectly.

8. Dosing device (1) according to at least one of the preceding claims, **characterized in that** an auxiliary device (12) operated by the auxiliary device shaft (4) is a discharge aid, in particular an agitator or an activator mechanism.

9. Dosing device (1) according to at least one of claims 1 - 7, **characterized in that** an auxiliary device (12) operated by the auxiliary device shaft (4) is a homogenizing device, in particular a dosing star, a stripper roller, or a mechanical vibrator/knocker.

10. Dosing device (1) according to at least one of the preceding claims, **characterized by** at least one further drive shaft (5) for driving additional dosing shafts (3) and/or auxiliary device shafts (4).

11. Dosing device (1) according to at least one of the preceding claims, **characterized in that** all coupling points (11) that couple the shafts (3, 4, 5) to the transmission elements (7) are identical in design.

12. Dosing device (1) according to at least one of the preceding claims, **characterized in that** at least the dosing shaft (3) and the auxiliary device shaft (4) are parallel to one another and/or horizontal in orientation.

13. Dosing device (1) according to at least one of the preceding claims, used for dosing bulk material (2).

14. Method for operating a dosing device (1) according to at least one of the preceding claims, **characterized in that**, for a changed speed ratio between drive shaft (5) and driven shafts (3, 4) or between the driven shafts (3, 4), the transmission (6) is uncoupled from the shafts (3, 4, 5) and subsequently coupled to the shafts (3, 4, 5) again in a position rotated by a specifiable angle W in the perpendicular transmission plane A, and/or for a changed speed ratio between drive shaft (5) and driven shafts (3, 4) or between the driven shafts (3, 4), the transmission (6) is uncoupled from the shafts (3, 4, 5), rotated by 180° about an axis D that lies on the perpendicular transmission plane A and passes through the center M of the circle B, and subsequently is coupled to the shafts (3, 4, 5) again in the rotated position.

## Revendications

1. Dispositif de dosage (1), plus particulièrement pour un produit en vrac (2), avec un arbre de dosage entraînable (3), un arbre d'agrégat auxiliaire entraînable (4), un arbre d'entraînement (5) ainsi qu'une transmission (6) intercalée entre l'arbre d'entraînement (5) et l'arbre de dosage (3) et/ou entre l'arbre d'entraînement (5) et l'arbre d'agrégat auxiliaire (4),
**caractérisé en ce que**
la transmission (6) comprend au moins deux éléments de transmission (7, 7-1, 7-2, 7-3) pouvant être couplés aux arbres entraînables (3, 4), dans lequel les au moins deux éléments de transmission (7, 7-1, 7-2, 7-3) sont disposés l'un par rapport à l'autre de façon à ce que leurs axes de rotation (8, 8-1, 8-2, 8-3) soient parallèles entre eux et que les points d'intersection (9, 9-1, 9-2, 9-3) des axes de rotation (8, 8-1, 8-2, 8-3) se trouvent répartis uniformément, avec un plan de transmission A perpendiculaire aux axes de rotation (8, 8-1, 8-2, 8-3), sur une circonférence U d'un cercle B.

2. Dispositif de dosage (1) selon au moins une des revendications précédentes, **caractérisé en ce que**
la transmission (6) est une transmission à complémentarité de forme, plus particulièrement une transmission à roues dentées, une transmission à courroie dentée ou une transmission à chaîne, ou une transmission par force, plus particulièrement une transmission à courroie.

3. Dispositif de dosage (1) selon au moins une des revendications précédentes, **caractérisé par**
trois, quatre, cinq ou plus de cinq éléments de transmission (7-1, 7-2, 7-3...) dans la transmission (6), qui sont disposés les uns par rapport aux autres de façon à ce que leurs axes de rotation (8, 8-1, 8-2, 8-3...) soient parallèles entre eux et les points d'intersection (9, 9-1, 9-2, 9-3...) des axes de rotation (8, 8-1, 8-2, 8-3...) se trouvent répartis uniformément, avec un plan de transmission A perpendiculaire aux axes de rotation (8, 8-1, 8-2, 8-3...), sur une circonférence U du cercle B.

4. Dispositif de dosage (1) selon au moins une des revendications précédentes, **caractérisé en ce que**
les éléments de transmission (7) sont conçus de façon à ce que, à l'aide des éléments de transmission (7) de la transmission (6), un rapport de réduction maximal de 1:5, plus particulièrement de 1:4, en outre plus particulièrement de 1:2,5 ou un rapport de multiplication maximal vers les vitesses rapides de 1:0,2, plus particulièrement 1:0,25, en outre plus particulièrement de 1:0,4 ou un écartement de 25, plus particulièrement 16, en outre plus particulièrement 6,25 peut être réalisé.

5. Dispositif de dosage (1) selon au moins une des revendications précédentes, **caractérisé par**
une unité d'entraînement (10) entraînant l'arbre d'entraînement (5) avec une vitesse de rotation constante ou une vitesse de rotation variable.

6. Dispositif de dosage (1) selon au moins une des revendications précédentes, **caractérisé en ce que**
la transmission (6) est disposée entre les arbres (3, 4, 5) de façon à ce qu'un des arbres entraînables (3, 4) soit entraîné directement.

7. Dispositif de dosage (1) selon au moins une des revendications 1-5, **caractérisé en ce que**
dans plus de deux éléments de transmission (7, 7-1, 7-2, 7-3...), la transmission (6) est disposée entre les arbres (3, 4, 5) de façon à ce que les arbres entraînables (3, 4) soient entraînés indirectement.

8. Dispositif de dosage (1) selon au moins une des revendications précédentes, **caractérisé en ce que**
un agrégat auxiliaire (12) actionné par l'arbre d'agrégat auxiliaire (4) est un dispositif auxiliaire d'extraction, plus particulièrement un mélangeur ou un mécanisme de foulage.

9. Dispositif de dosage (1) selon au moins une des revendications 1 - 7, **caractérisé en ce que**
un agrégat auxiliaire (12) actionné par l'arbre d'agrégat auxiliaire (4) est un dispositif d'uniformisation, plus particulièrement une étoile de dosage, un cylindre détacheur ou un agitateur/batteur.

10. Dispositif de dosage (1) selon au moins une des revendications précédentes, **caractérisé par**
au moins un arbre d'entraînement supplémentaire (5) pour l'entraînement d'arbres de dosage (3) et/ou d'arbres d'agrégats auxiliaires (4) supplémentaires.

11. Dispositif de dosage (1) selon au moins une des revendications précédentes, **caractérisé en ce que**
tous les points de couplage (11) couplant les arbres (3, 4, 5) sur les éléments de transmission (7) sont conçus de manière identique.

12. Dispositif de dosage (1) selon au moins une des revendications précédentes, **caractérisé en ce que**
au moins l'arbre de dosage (3) et l'arbre d'agrégat auxiliaire (4) sont orientés parallèlement entre eux et/ou horizontalement.

13. Dispositif de dosage (1) selon au moins une des revendications précédentes, utilisé pour
le dosage d'un produit en vrac (2).

14. Procédé de fonctionnement d'un dispositif de dosage (1) selon au moins une des revendications précédentes,
**caractérisé en ce que**
pour modifier un rapport de multiplication entre l'arbre d'entraînement (5) et l'arbre entraîné (3, 4) ou entre les arbres entraînés (3, 4), la transmission (6) est découplée des arbres (3, 4, 5) puis, dans une position tournée, dans le plan de transmission perpendiculaire A, d'un angle W prédéterminé, à nouveau couplé avec les arbres (3, 4, 5),
et/ou
pour modifier un rapport de multiplication entre l'arbre d'entraînement (5) et l'arbre entraîné (3, 4) ou entre les arbres entraînés (3, 4), la transmission (6) est découplée des arbres (3, 4, 5), tournée de 180° autour d'un axe D, qui se trouve sur le plan de transmission perpendiculaire A et qui passe par le point central M du cercle B, puis à nouveau couplé dans la position tournée avec les arbres (3, 4, 5).
